# EUROPEAN PATENT SPECIFICATION

(11) **EP 3 015 524 B1**
(45) Date of publication and mention of the grant of the patent: **04.07.2018**
(21) Application number: 14818833.7
(22) Date of filing: 09.05.2014
(51) Int. Cl.: C09J 189/00, B27N 1/02, C08K 5/21

(54) **COMPOSITION IN AN AQUEOUS BASE, METHOD FOR PRODUCING SAME, AND USE OF SAID COMPOSITION AS A BIOADHESIVE**
ZUSAMMENSETZUNG IN EINER WÄSSRIGEN BASIS, VERFAHREN ZUR HERSTELLUNG DAVON UND VERWENDUNG DER BESAGTEN ZUSAMMENSETZUNG ALS BIOHAFTSTOFF
COMPOSITION DE BASE AQUEUSE, PROCÉDÉ D'OBTENTION DE CELLE-CI, ET UTILISATION DE LA COMPOSITION COMME BIOADHÉSIF

(30) Priority: 25.06.2013 WO PCT/ES2013/070419; 23.01.2014 ES 201430064
(43) Date of publication of application: 04.05.2016
(73) Proprietor: Foresa, Industrias Químicas Del Noroeste, S.A.U., 36650 Caldas de Reis (Pontevedra) (ES)
(72) Inventor: OTERO VAZQUEZ, Luis, Alberto, E-36650 Caldas de Rei (Pontevedra) (ES); VIZ RODRIGUEZ, Felipe, E-36650 Caldas de Rei (Pontevedra) (ES)
(74) Representative: Carpintero Lopez, Francisco
(86) International application number: PCT/ES2014/070390
(87) International publication number: WO 2014/207277

(56) References cited:
- WO-A1-2008/011455
- WO-A1-2013/079680
- US-A1- 2011 048 280
- JIAN HUANG ET AL: "A New Soy Flour-Based Adhesive for Making Interior Type II Plywood", JOURNAL OF THE AMERICAN OIL CHEMISTS' SOCIETY (JAOCS), vol. 85, no. 1, 15 November 2007 (2007-11-15), pages 63-70, XP055311379, DE ISSN: 0003-021X, DOI: 10.1007/s11746-007-1162-1
- LIU ET AL: "Development and characterization of adhesives from soy protein for bonding wood", INTERNATIONAL JOURNAL OF ADHESION AND ADHESIVES, ELSEVIER, AMSTERDAM, NL, vol. 27, no. 1, 24 September 2006 (2006-09-24), pages 59-67, XP005878332, ISSN: 0143-7496, DOI: 10.1016/J.IJADHADH.2005.12.004
- CHENG, E. ET AL.: 'Adhesive properties of modified soybean flour in wheat straw particleboard.' COMPOSITES: PART. A. vol. 35, 2004, pages 297 - 302, XP027112866

## Description

### OBJECT OF THE INVENTION

The present invention relates to an aqueous based composition for the use thereof as a bioadhesive as well as to a method for obtaining the same.

At the same time, it relates to a composite which contains: the composition of the invention and a lignocellulosic material or rock wool or paper or glass fiber or plastic or cork and to the products such as for example boards made with the composite of the invention.

### BACKGROUND OF THE INVENTION

In the context where aminoplast resins have been developed up to the point of allowing the manufacturing of a board with a low emission of formalin, there exists a growing interest in providing an adhesive free of formaldehyde and free of other products which cause doubts from a health or environmental point of view (such as methylene diphenyl diisocyanate, polyamide epichlorohydrin (PAE), styrene, glyoxal, phenoplasts, etc.).

For example, the US patent application US7785440: "Formaldehyde-Free Lignocellulosic Adhesives and Composites made from the adhesives" describes soy protein compositions isolated with a crosslinking agent based on polyamide epichlorohydrin. This adhesive composition does not include formaldehyde in the composition thereof but involves the use of derivatives of epichlorohydrin, a product which is not very suitable from a health and environmental point of view.

Related to this previous patent application, the article "Development and characterization of adhesives from soy protein for bonding wood", from Liu, Yuan; Li, Kaichang, published in the International Journal of Adhesion and Adhesives (2006), Volume Date 2007, 27(1), 59-67, describes, in a general manner, the use of soy proteins isolated together with maleic anhydride and polyethyleneimine (PEI).

The document "Adhesive Properties of Soy Proteins Modified by Urea and Guanidine Hydrochloride" from Huang and Sun describes the modification of a soy protein isolate (SPI) with urea and guanidine hydrochloride.

In the US patent document, US20100069534: "Stable soy/urea adhesives and methods of making same", in addition describes compositions for producing a denatured soy/urea adhesive heating the soy meal.

The US patent US2007064970: "Water-resistant vegetable protein powder adhesive compositions", also describes soy meal compositions modified with different crosslinkers (phenoplast resins, isocyanate, glyoxal, polyamide epichlorohydrin, etc.).

The Chinese patent CN102399515: "Curing agent of protein adhesive and its preparation method and application" relates to the preparation of a polymer of an acid and an amine with a certain molecular weight in conditions which require a pressurized reactor. Once the polymer has been obtained, it is mixed with a protein meal.

Lastly the international application with publication number WO2013079680 describes an aqueous based adhesive composition. The adhesive component is obtained upon causing an alkanolamine to react with at least one polycarboxylic acid or anhydride at high temperature. Subsequently, a soy protein is added to the adhesive component of the reaction of the alkanolamine and the acid or anhydride and optionally a sugar or urea is added. In the tests of the invention, it is described that the proportion of the adhesive component, that is to say, the aqueous composition of the alkanolamine and polycarboxylic acid represents at least 38% of the final composition.

Therefore, as it is found in the prior art, there is a need for a composition which can be used as a bioadhesive without components which are detrimental to the environment and without the need to use crosslinker components in the composition and which is obtained in a simple manner.

### DESCRIPTION OF THE INVENTION

With this objective, in the present invention an aqueous based composition is developed which can be used as an adhesive, in which the principal component is a primary material of plant origin, specifically plant meal with a protein content of 30% to 80% and the other components are respectful of both the environment and human health.

Unlike the other products of the prior art, the aqueous composition of the invention avoids the use of crosslinkers such as isocyanate polymers, polyamide epichlorohydrin (PAE), styrene, glyoxal, phenoplasts and other products which have been considered as unsuitable such as heavy metals, halogens and derivatives, etc, such that the aqueous composition of the invention does not emit formaldehyde.

The composition of the invention is an aqueous based dispersion which has the following components: an agent which provides aminoacid functional groups, such as plant meals, a co-reactant agent (dicarboxylic acids and/or anhydrides thereof; tricarboxylic acids), a plastifying agent and co-reactant, carbamide and an amino derivative pH modifying agent with co-reactant nature.

Therefore, a first aspect of the invention relates to an aqueous based composition which comprises:
a) plant meal with a protein content of 30% to 80%, in a percentage by weight of between 10% and 24% with respect to the total weight of the composition;
b) a dicarboxylic acid or the anhydride corresponding thereto or a tricarboxylic acid in a percentage by weight of between 1% and 4% with respect to the total weight of the composition;
c) carbamide in a percentage by weight of between 4% and 20% with respect to the total weight of the composition and
d) a pH correcting compound which comprises an amino group in a percentage by weight of between 1% and 5% with respect to the total weight of the composition.

In the present invention, in a surprising manner, good bonding properties are obtained with a very low proportion of acid or anhydride corresponding thereto.

The compositions of the invention have the following advantageous compositions vis-à-vis the compositions of the prior art such as: the use of a plant meal with a protein content of 30% to 80% instead of the concentrates thereof, for example 70% soy protein concentrate (SPC) or 90% soy protein isolate (SPI) which avoids the additional transformations which increase the economic and environmental cost; it is a composition with a rheological behavior such that it allows a high mechanical stability and storage of product; the composition can be readily applied; in the composition it is not necessary to use crosslinkers, catalyzers, resins, biocides, etc. Due to the composition thereof, the adhesive shows excellent bonding properties.

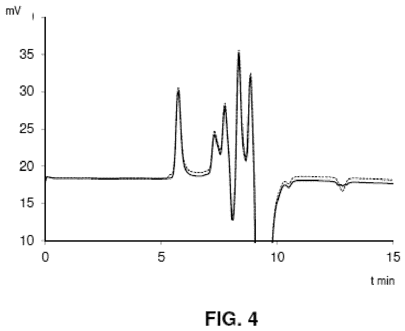

A second aspect of the invention is the method for obtaining the composition of the invention. It is a simple method. It consists of a dispersion in a temperature range of between 4° C and 100° C. The temperature has no influence on the degree of condensation of the bioadhesive nor on the mechanical properties thereof (see Fig. 4).

Therefore, a second aspect of the invention relates to a method for obtaining the composition of the invention which comprises the water dispersion of the different components of the composition according to the first aspect of the invention at a temperature of between 4° C and 100° C.

Similarly, the product obtained by the method described in the second aspect of the invention is described.

The composition of the invention is an adhesive composition without the need to include in the same components which can damage the environment.

Therefore a third aspect of the invention relates to the use of the composition according to the invention as a bioadhesive.

The composition of the invention due to the adhesive characteristics thereof is mixed with lignocellulosic material or with rock wool or paper or plastic or with glass fiber or cork to form a composite which allows the environmental footprint to be reduced and at the same time said composite shows good physical-chemical properties. The lignocellulosic material can be in the form of fibers, particles, strands or similar.

Therefore, a fourth aspect of the invention relates to a composite which comprises a composition according to the invention and lignocellulosic material or rock wool or paper or plastic or glass fiber or cork.

With the composite of the invention which comprises the composition of the invention and the lignocellulosic material, any product derived from wood can be obtained such as boards or laminated floors.

With the composite of the invention which comprises the composition of the invention and lignocellulosic material and/or paper, laminated products such as from the class of high pressure laminated products (HPL, high pressure laminate), the class of continuous press laminated products (CPL, continuous pressure laminate) or the class of direct pressure laminated products (DPL, direct pressure laminate). Advantageously, the composition of the invention shows a high resistance to the precure process, for example during the drying phase of the composite in the manufacturing of a board.

In the present invention, "high pressure laminated products" relate to a laminated product formed by layers of cellulosic fiber material impregnated with thermostable resins and joined to each other by means of a high pressure process. A high pressure process is defined as the simultaneous application of heat (temperature greater than or equal to 120° C) and high specific pressure (greater than or equal to 5 MPa) which allows the thermostable resins to flow and subsequently cure to produce a homogenous non-porous material with greater density (greater than or equal to 1.35 g/cm³) and with the required surface finishing.

In the present invention, "continuous press laminated products" relates to a laminated product which is formed by layers of cellulosic fiber material impregnated with thermostable resins and joined to each other by means of a pressure process applied in a continuous press.

In the present invention, "direct pressure laminated product" relates to a laminated product which is formed by at least one layer of cellulosic fiber material impregnated with thermostable resins and a nucleus or base layer, joined to each other by means of a pressing process in short cycle press (plate press or direct press).

A fifth aspect of the invention relates to a board which comprises the composite defined in the invention which comprises a composition according to the invention and the lignocellulosic material.

A sixth aspect of the invention relates to a laminated floor which comprises the composite defined in the invention which comprises a composition according to the invention and the lignocellulosic material.

Other elements which can comprise the composite of the invention are furniture, derived from wood for interiors, moldings or profiles.

A seventh aspect of the invention relates to an isolating material which comprises the composite defined in the invention. Preferably the composite comprises a composition according to the invention and the lignocellulosic material.

### DESCRIPTION OF THE FIGURES

Fig. 1 shows the FT-IR spectrum (Fourier transform infrared spectroscopy) of a plant meal with a protein content of 30 to 80%. %T (transmittance) is represented against cm⁻¹.
Fig. 2 shows the CPG-UV spectrum (Gel-permeation chromatography - ultraviolet) of the soy meal (ref. soy meal) in discontinuous line and the final composition (ref. E-22 of example 3) in continuous line. In the figure, the mV signal is represented against time in minutes.
Fig. 3 shows the CPG IR spectrum (Gel-permeation chromatography - refractive index) of the soy meal (ref. soy meal) in discontinuous line and of the final composition (ref. E-22 of example 3) in continuous line. In the figure, the mV signal is represented against time in minutes.]
Fig. 4 shows that the change in temperature of the manufacturing process of the composition of the invention does not influence the characteristics of the composition. In Fig. 4 the mV signal is represented against time in minutes. The discontinuous line represents the E-22 test of example 3, carried out at 20° C, the continuous line represents the E-21 test, carried out at 95° C.

### DETAILED DESCRIPTION OF THE INVENTION

As has been mentioned above, the first aspect of the invention relates an aqueous based composition which comprises:
a) plant meal with a protein content of 30% to 80% in a percentage by weight of between 10% and 24% with respect to the total weight of the composition;
b) a dicarboxylic acid or the anhydride corresponding thereto or a tricarboxylic acid in a percentage by weight of between 1% and 4% with respect to the total weight of the composition;
c) carbamide in a percentage by weight of between 4% and 20% with respect to the total weight of the composition and
d) a pH correcting compound which comprises an amino group in a percentage by weight of between 1% and 5% with respect to the total weight of the composition.

In a preferred materialization, the percentage by weight of the component b) is between 1% and 3% of the total weight of the composition and the percentage by weight of component d) is between 1% and 4%.

Examples of plant meals which can be used in the present invention relate to soy, bean, wheat and corn meals. The plant meal is particularly soy meal. More preferably it is deoiled soy meal with a protein content of 40% to 50%.

The dicarboxylic or tricarboxylic acid referred to in the invention is aromatic, aliphatic or cyclic and the number of carbons of the dicarboxylic or tricarboxylic acid is between 4 and 36. Preferably the anhydride of the dicarboxylic acid is maleic anhydride.

Non-limiting examples of pH correcting compounds which comprise an amino group related to a monoethanolamine, diethanolamine, triethanolamine. By way of reference, the pH correcting compound is monoethanolamine.

As has been mentioned the method of the invention relates to a water dispersion of the different components of the composition according to a first aspect of the invention at a temperature of between 4° C and 100° C. In a preferred materialization, the method is carried out at a temperature of between 20° C and 60° C.

In a preferred materialization, the method of the invention comprises the following steps:
a) Adding water in a reactor, a dicarboxylic acid or anhydride corresponding thereto or a tricarboxylic acid and carbamide;
b) Agitating
c) Adding the plant meal with a protein content of 30% to 80%;
d) Adding the pH correcting compound which comprises an amino group;
e) Agitating.

In a materialization of the method, the viscosity is adjusted to 1000-3000 cP by means of adding water.

In a materialization of the method of the invention, the percentages which are added are between 10% and 24 % of plant meal; between 1% and 4% of the dicarboxylic acid or the anhydride corresponding thereto or a tricarboxylic acid; between 4% and 20% of carbamide; between 1% and 5% of the pH correcting compound which comprises an amino group of between 40% and 75% water.

In the present invention, the product obtained is also described in the method of the invention and in the materializations of the method of the invention described.

In a preferred embodiment, the composition also comprises a pH controlling agent selected from: an alkali metal hydroxide or an alkali metal carbonate, or an alkali earth metal hydroxide, or an alkali earth metal carbonate. Non-limiting examples of alkali metal hydroxides are sodium hydroxide, potassium hydroxide and lithium hydroxide. Non-limiting examples of alkali metal carbonates are potassium carbonate and sodium carbonate. Non-limiting examples of alkali earth metal hydroxides are calcium hydroxide or alkali earth metal carbonates such as calcium carbonate. Preferably, alkali metal hydroxides are used. More preferably sodium hydroxide.

In a preferred embodiment, the composition according to the invention comprises:
a) Plant meal with a protein content of 30% to 80% in a percentage by weight of between 10% and 24% with respect to the total weight of the composition;
b) A dicarboxylic acid or the anhydride corresponding thereto or a tricarboxylic acid in a percentage by weight of between 1% and 4% with respect to the total weight of the composition;
c) Carbamide in a percentage by weight of between 4% and 20% with respect to the total weight of the composition;
d) A pH correcting compound which comprises an amino group in a percentage by weight of between 1% and 5% with respect to the total weight of the composition;
e) A pH controlling agent selected from: an alkali metal hydroxide or an alkali metal carbonate or an alkali earth metal hydroxide or an alkali earth metal carbonate in a percentage by weight of between 0.1% and 0.5% with respect to the total weight of the composition.

The composition of the invention can also include an additive selected from the group of: waterproof, fireproof additives, colorants, crosslinkers and catalyzers or mixtures of these.

In a particular materialization, the composition of the invention can also comprise different resins. Mixing resins with the composition of the invention, the object is to reduce the presence of formaldehyde in the starting resins. The resins with which the composition of the invention can be mixed are for examples: urea-formalin resins, melanin formalin, melanin urea formalin, phenol formalin, polyvinyl acetate, vinyl veova, acrylic resins, acrylic styrene resins or combinations of the foregoing.

Preferably the composite of the invention is a composite which comprises a composition according to the invention and lignocellulosic material.

Preferably the composition according to the invention is in a percentage of between 5% and 35% by dry weight with respect to the lignocellulosic material by dry weight.

The fifth aspect of the invention relates to a board which comprises the composite defined in the invention. Preferably this board is a type of low density fiber, medium density fiber or high density fiber or strand oriented board or particle board or plywood board or high density board or combinations of the same. Particularly the board is of medium density fiber.

In another preferred materialization, the composite of the invention comprises a composition according to the invention and plastic or glass fiber or combinations of these. The composite of this preferred materialization is extruded or injected or molded.

The elements which are obtained by means of extrusion, injection or molding of the composite of this materialization of the invention can be for example elements of the automotive industry such as trims, dashboards, floors amongst others.

### Examples

### Example 1. Characterization of the meal

Plant meal characterization with a protein content of 30% to 80%. The result of the CG-MS analysis (gas chromatography - mass spectrometry) is the following

**Table 1. CG-MS analysis extracts from the oily phase of the plant meal with a protein content of 30% to 80%.**

| Tr, min | % | COMPOUND | CAS NO. |
|---|---|---|---|
| 4.95 | 15.7 | Nonane | 111-84-2 |
| 9.60 | 6.2 | Maltol | 118-71-8 |
| 29.50 | 1.8 | Methyl ester palmitic acid | 112-39-0 |
| 30.20 | 26.7 | Palmitic acid | 57-10-3 |
| 33.19 | 29.7 | Linoleic acid | 60-33-3 |
| 33.33 | 19.9 | Cis-oleic acid | 112-80-2 |

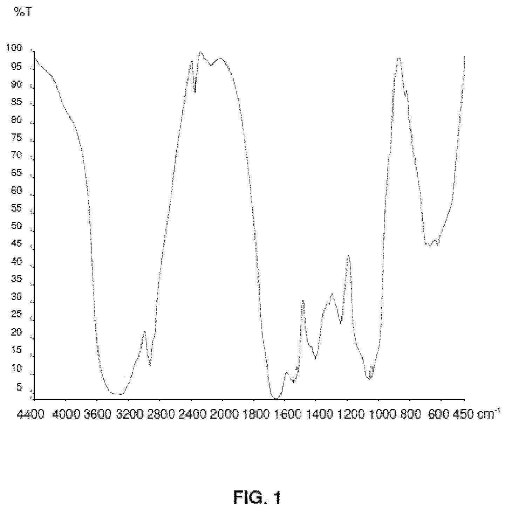

In Fig. 1, the FT-IR spectrum (Fourier transform infrared spectroscopy) of a plant meal with a protein content of 30 to 80% is shown.

### Example 2. Method for obtaining the composition

The method was carried out in a disperser in temperature and atmospheric pressure conditions.

The steps which were followed are the following:
a) Water was loaded in the disperser;
b) The maleic anhydride was added;
c) It was maintained for 20 minutes in moderate agitation to complete solution;
d) Carbamide was added, it was maintained for 20 minutes in moderate agitation to complete solution;
e) Soy meal was added slowly with intense agitation;
f) MEA was added and it was maintained for ten minutes with intense agitation;
g) Water was added.

The quantities added in the method are the following: water in step a) 57%, maleic anhydride in step b) 1.0%, urea in step d) 4.0%, soy meal in step e) 20.0%, MEA, in step f) 4%; water in step g) 14%.

The composition which is obtained is the composition which is reflected in example 3 as Test 20 (E-20). The rest of the compositions were carried out in the same manner with the caveat that each one of these used the components described in Table 2 of example 3.

### Example 3

The compositions carried out in example 2 are those shown in Table 2.

**Table 2 Tested compositions**

| Tests | Composition |
|---|---|
| E-01 | Casein derivative + soy protein meal + maleic anhydride + carbamide + monoethanolamine (MEA) |
| E-02 | Polysaccharide derivative + soy protein meal + maleic anhydride + carbamide + MEA |
| E-03 | Minor N soy protein meal + maleic anhydride + carbamide + MEA |
| E-04 | Soy bean protein meal + maleic anhydride + carbamide + MEA |
| E-05 | Cornstarch + maleic anhydride + carbamide + MEA |
| E-06 | Mineral load + maleic anhydride + carbamide + MEA |
| E-07 | Protein meal content 35% + maleic anhydride + carbamide + MEA |
| E-08 | Soy protein meal + tricarboxylic acid + carbamide + MEA |
| E-09 | Soy protein meal + maleic anhydride + carbamide + MEA + polyunsaturated fatty acid |
| E-10 | Soy protein meal + maleic anhydride + carbamide + MEA+ furfuryl alcohol |
| E-11 | Soy protein meal + maleic anhydride + carbamide + MEA+ furfuraldehyde |
| E-12 | Soy protein meal + maleic anhydride + carbamide + MEA +polysaccharide derivative |
| E-13 | Soy protein meal + maleic anhydride + carbamide + MEA+ caprolactam |
| E-14 | Soy protein meal + maleic anhydride + carbamide + MEA+ glutaraldehyde crosslinker |
| E-15 | Soy protein meal + maleic anhydride + carbamide + MEA+ surfactant |
| E-16 | Soy protein meal + maleic anhydride + carbamide + triethanolamine |
| E-17 | Soy protein meal + maleic anhydride + carbamide + MEA |
| E-18 | Soy protein meal + maleic anhydride + carbamide + diethanolamine |
| E-19 | Soy protein meal + maleic anhydride + carbamide + diethanolamine |
| E-20 | Soy protein meal + maleic anhydride + carbamide + MEA |
| E-21 | Soy protein meal + maleic anhydride + carbamide + MEA |
| E-22 | Soy protein meal + maleic anhydride + carbamide + MEA |

Different laboratory tests with the aim of achieving a stable product with suitable physical-chemical characteristics and reasonable cost were carried out (see Table 3).

**Table 3: Tests of different compositions.**

| Tests | pH | Viscosity (cp) | Density: kg/m^3 | Traction (N/mm^ 2) | % Swellin g | % Absorptio n | Formal in EN-120 |
|---|---|---|---|---|---|---|---|
| E-01 | 10. 5 | 4370 | 763 | 0.35 | 8.5 | 54.1 | 0.2 |
| E-02 | 9.5 | 3900 | 604 | 0.06 | >200 | >200 | 0.2 |
| E-03 | 9.5 | 3900 | 738 | 0.28 | 17.1 | 45.5 | 0.2 |
| E-04 | 9.6 | 2600 | 754 | 0.47 | 11.6 | 49.7 | 0.2 |
| E-05 | 9.9 | Very low* | 716 | <0,03 | 29,1 | 124 | 0,3 |
| E-06 | 9.8 | low* | 708 | <0.03 | It broke up | It broke up | |
| E-07 | 9.5 | 60 | 739 | <0.12 | 42.0 | 108.7 | 0.2 |
| E-08 | 8.7 | 2020 | 753 | 0.33 | 51.1 | 129.1 | 0.3 |
| E-09 | 9.2 | 1905 | 745 | 0.23 | 12.1 | 40.5 | 0.2 |
| E-10 | 9.2 | 1934 | 751 | 0.26 | 12 | 42.7 | 0.2 |
| E-11 | 9.2 | 1900 | 748 | 0.23 | 11.6 | 40.2 | 0.2 |
| E-12 | 9.7 | 520 | 761 | 0.23 | 30.9 | 74.8 | 0.2 |
| E-13 | 9.0 | 610 | 776 | 0.20 | 17.2 | 62.6 | 0.2 |
| E-14 | 6,2 | 400 | Dismal sprayability: a medium density fiber board is not manufactured | | | | |
| E-15 | 9.5 | 1360 | 798 | 0.25 | 22 | 67.3 | 0.2 |
| E-16 | 9.5 | 1400 | 724 | 0.21 | 31.7 | 115 | 0.2 |
| E-17 | 11. 0 | 1300 | 750 | 0.34 | 19.6 | 71 | 0.1 |
| E-18 | 9.5 | 1400 | 796 | 0.25 | 17.8 | 54.4 | 0.2 |
| E-19 | 10. 6 | 2200 | 789 | 0.29 | 16.4 | 60.5 | 0.2 |
| E-20 | 11. 0 | 1300 | 810 | 0.32 | 13.7 | 54.4 | 0.2 |
| E-21 | 9.2 | 2940 | 734 | 0.46 | 10.1 | 32.2 | 0.2 |
| E-22 | 9.2 | 2410 | 730 | 0.46 | 8.8 | 28.4 | 0.2 |

In the tests E-01-07, the differences between the different meals were studied, from which soy meal is the most suitable. It is seen that in test E07 that a mineral load would not produce an adhesive composition. Additionally, in the tests E-09-16, the effect of different additives is evaluated, which do not provide improvements in the properties of the bioadhesive. In another comparative study (E-16-20), the differences between the different co-reactant pH modifiers are evaluated. Lastly (E-21-22), it is determined that the manufacturing temperature of the bioadhesive does not influence the mechanical properties. In the test E-22, the dispersion of the different components is carried out at 20° C while in the test E-21, the dispersion of the different components is carried out at 95° C.

The formaldehyde emission values (standard EN-120) of the boards manufactured with plant meal with a protein content of 30% to 80% correspond to the typical emission values of natural wood.

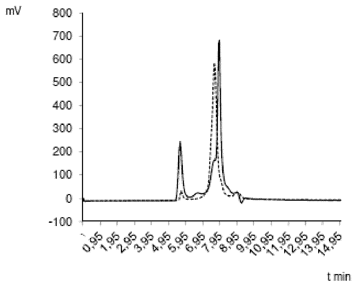

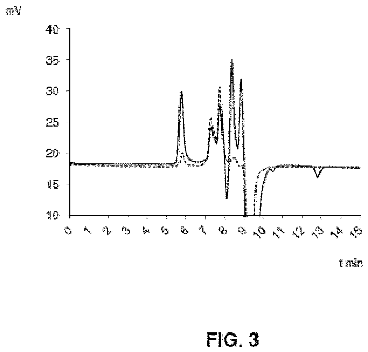

The increase in molecular weight is evaluated by means of CPG (Gel-permeation chromatography) (Fig. 2 and 3). See the increase of the peak of the soy meal (ref. soy meal) to the final resin (the final composition (Ref E-22)) in the chromatographs.

From these data, it is concluded that by means of a simple, economic and respectful manufacturing process, from an environmental point of view, it is possible to move from a product with low molecular weight (soy meal) to another with high molecular weight (bioadhesive of the final composition).

### Example 3. Manufacturing of an MDF board (medium density fiber board)

On 14/12/2012, an industrial scale test of the composition of the invention was carried out (composition ref. E-22) [10 tonnes].

The application of the product was carried out in the same manner as a process with aminoplast resin (urea formalin) which consists of:
- wet gluing the fiber to the outlet of the digester in a blow line glue gun,
- Drying the fiber in two-step casting,
- Formation of a forming blanket,
- Cold pre-pressing,
- Continuous press pressing.

The new plant meal based composition with a protein content of 30 to 80% is less reactive than a urea-formalin resin, thus the curing factor is increased (slowing down the velocity of the press).

The results obtained in these application examples are shown in the following table:

**Table 4: Application examples of soy resin in the manufacturing of a medium density fiber board.**

| | Urea Formalin | Composition of the invention E-22 |
|---|---|---|
| Date of manufacture | 14/12/2012 | 14/12/2012 |
| Time of manufacture | 10:10 | 13:00 |
| Blanket moisture, % | 9.0-10.0 | 9.0-10.0 |
| Press temperature °C | 240/235/230/220/210 | 235/230/225/215/205 |
| Thickness, mm | 12.60 | 12.65 |
| Color s/sand L/a/b | 56.2/10.3/26.8 | 40.7/12.2/22.2 |
| Sanding color L/a/b | 56.8/8.3/21.7 | 45.5/10.8/22.8 |
| Internal traction, N/mm2 | 0.86 | 0.95 |
| Surface traction, kgf/ cm2 | 123/123 | 129/118 |
| Surface absorption, g/m2 | 70/61 | 92/90 |
| Abs. Water 24h., 20° C, % | 45.4 | 41.8 |
| Swell. Water 24h., 20° C, % | 15.8 | 13.0 |
| Moisture ATRO, % | 5.2 | 4.8 |
| Formalin mg/100g. dry board | 6.9 | 0.1 |
| Formalin to 6.5% moisture mg/100g. dry board. EN-120 | 7.6 | 0.14 |

These physical-chemical characteristics have not been achieved hitherto by means of the products existing on the market (aminoplast resins).

## Claims

1. An aqueous based composition which comprises:
a) plant meal with a protein content of 30% to 80%, in a percentage by weight of between 10% and 24% with respect to the total weight of the composition;
b) a dicarboxylic acid or the anhydride corresponding thereto or a tricarboxylic acid in a percentage by weight of between 1% and 4% with respect to the total weight of the composition;
c) carbamide in a percentage by weight of between 4% and 20% with respect to the total weight of the composition and
d) a pH correcting compound which comprises an amino group in a percentage by weight of between 1% and 5% with respect to the total weight of the composition.

2. The composition according to claim 1, which also comprises a pH controlling agent selected from: an alkali metal hydroxide or an alkali metal carbonate, or an alkali earth metal hydroxide, or an alkali earth metal carbonate.

3. The composition according to claims 1 to 2, which comprises:
a) Plant meal with a protein content of 30% to 80% in a percentage by weight of between 10% and 24% with respect to the total weight of the composition;
b) A dicarboxylic acid or the anhydride corresponding thereto or a tricarboxylic acid in a percentage by weight of between 1% and 4% with respect to the total weight of the composition;
c) Carbamide in a percentage by weight of between 4% and 20% with respect to the total weight of the composition;
d) A pH correcting compound which comprises an amino group in a percentage by weight of between 1% and 5% with respect to the total weight of the composition;
e) A pH controlling agent selected from: an alkali metal hydroxide or an alkali metal carbonate or an alkali earth metal hydroxide or an alkali earth metal carbonate in a percentage by weight of between 0.1% and 0.5% with respect to the total weight of the composition.

4. The composition according to any one of claims 1 to 3, wherein the dicarboxylic or tricarboxylic acid is aromatic, aliphatic or cyclic and the number of carbons of the dicarboxylic or tricarboxylic acid is between 4 and 36.

5. The composition according to any one of claims 1 to 4, wherein the anhydride of the dicarboxylic acid is maleic anhydride.

6. The composition according to any one of claims 1 to 5, wherein the plant meal is deoiled soy meal with a protein content of 40% to 50%.

7. The composition according to claims 1 to 6, wherein the pH correcting compound which has an amino group is monoethanolamine.

8. The composition according to claims 1 to 7, which also comprises an additive selected from the group of: waterproof, fireproof additives, colorants, crosslinkers and catalyzers or mixtures of these.

9. A method for obtaining the composition according to claims 1 to 8, which comprises the water dispersion of components a) to d) of claim 1 or a) to e) of claim 3 at a temperature of between 4° C and 100° C.

10. A use of the composition as defined in claims 1 to 8 as a bioadhesive.

11. A composite which comprises a composition according to claims 1 to 8 and lignocellulosic material or rock wool or paper or glass fiber or plastic or cork.

12. The composite according to claim 11, which comprises a composition according to claims 1 to 8 and lignocellulosic material.

13. The composite according to claim 12, wherein the composition according to claims 1 to 7 is comprised in a percentage of between 5 and 35% by dry weight with respect to the lignocellulosic material by dry weight.

14. A board which comprises the composite defined in claims 12 to 13.

15. The board according to claim 14, wherein the board is low density fiber or medium density fiber or high density fiber or oriented strand board or particle boards or plywood board or high density board or combinations of the same.

16. A laminated product which comprises the composition of the invention according to claim 1-8 and lignocellulosic material and/or paper, selected from: the class of high pressure laminated products and/or the class of continuous press laminated products and/or the class of direct pressure laminated products.

17. An isolated material which comprises the composite defined in claims 12 to 13.

## Patentansprüche

1. Zusammensetzung auf Wasserbasis aufweisend:
a) Pflanzenmehl mit einem Proteingehalt von 30% bis 80%, in einem Gewichtsprozentsatz zwischen 10% und 24% in Bezug auf das Gesamtgewicht der Zusammensetzung;
b) eine Dicarbonsäure oder das entsprechende Anhydrid oder eine Tricarbonsäure in einem Gewichtsprozentsatz zwischen 1% und 4% in Bezug auf das Gesamtgewicht der Zusammensetzung;
c) Karbamid in einem Gewichtsprozentsatz zwischen 4% und 20% in Bezug auf das Gesamtgewicht der Zusammensetzung und
d) eine pH-korrigierende Verbindung, die eine Aminogruppe in einem Gewichtsprozentsatz zwischen 1% und 5% in Bezug auf das Gesamtgewicht der Zusammensetzung aufweist.

2. Zusammensetzung nach Anspruch 1, welche ebenso ein Mittel zum Einstellen des pH-Wertes aufweist, ausgewählt aus: einem Alkalimetallhydroxid oder einem Alkalimetallcarbonat oder einem Erdalkalimetallhydroxid oder einem Erdalkalimetallcarbonat.

3. Zusammensetzung nach einem der Ansprüche 1 bis 2, welche aufweist:
a) Pflanzenmehl mit einem Proteingehalt von 30% bis 80% in einem Gewichtsprozentsatz zwischen 10% und 24% in Bezug auf das Gesamtgewicht der Zusammensetzung;
b) eine Dicarbonsäure oder das entsprechende Anhydrid oder eine Tricarbonsäure in einem Gewichtsprozentsatz zwischen 1% und 4% in Bezug auf das Gesamtgewicht der Zusammensetzung;
c) Carbamid in einem Gewichtsprozentsatz zwischen 4% und 20% in Bezug auf das Gesamtgewicht der Zusammensetzung;
d) eine pH-korrigierende Verbindung, welche eine Aminogruppe in einem Gewichtprozentsatz zwischen 1% und 5% in Bezug auf das Gesamtgewicht der Zusammensetzung aufweist;
e) ein Mittel zum Einstellen des pH-Wertes ausgewählt aus: einem Alkalimetallhydrid oder einem Alkalimetallcarbonat oder einem Erdalkalimetallhydrid oder einem Erdalkalimetallcarbonat in einem Gewichtsprozentsatz zwischen 0,1% und 0,5% in Bezug auf das Gesamtgewicht der Zusammensetzung.

4. Zusammensetzung nach einem der Ansprüche 1 bis 3, wobei die Dicarbonsäure oder Tricarbonsäure aromatisch, aliphatisch oder zyklisch ist und die Anzahl der Kohlenstoffatome der Dicarbonsäure oder Tricarbonsäure zwischen 4 und 36 liegt.

5. Zusammensetzung nach einem der Ansprüche 1 bis 4, wobei das Anhydrid der Dicarbonsäure Maleinsäureanhydrid ist.

6. Zusammensetzung nach einem der Ansprüche 1 bis 5, wobei das Pflanzenmehl entöltes Sojamehl mit einem Proteingehalt von 40% bis 50% ist.

7. Zusammensetzung nach einem der Ansprüche 1 bis 6, wobei die pH-korrigierende Verbindung, welche eine Aminogruppe aufweist, Monoethanolamid ist.

8. Zusammensetzung nach Anspruch 1 bis 7, die zusätzlich ein Additiv, ausgewählt aus der Gruppe von: wasserfesten, feuerfesten Additiven, Farbstoffen, Vernetzern und Katalysatoren oder Mischungen von diesen aufweist.

9. Verfahren zum Herstellen der Zusammensetzung nach Ansprüchen 1 bis 8, welche eine Wasserdispersion der Komponenten a) bis d) aus Anspruch 1 oder 3 bei einer Temperatur zwischen 4°C und 100°C aufweist.

10. Verwendung der Zusammensetzung nach den Ansprüchen 1 bis 8 als Bioadhäsiv.

11. Komposit, welches eine Zusammensetzung nach den Ansprüchen 1 bis 8 und lignocellulose-haltiges Material oder Steinwolle oder Papier oder Glasfaser oder Kunststoff oder Kork aufweist.

12. Komposit nach Anspruch 11, welches eine Zusammensetzung nach den Ansprüchen 1 bis 8 und lignocelluloses Material aufweist.

13. Komposit nach Anspruch 12, wobei die Zusammensetzung nach Ansprüchen 1 bis 7 in einem Prozentsatz zwischen 5% und 35% Trockengewichtsprozent in Bezug auf das lignocellulose Material nach Trockengewicht aufweist.

14. Platte, welche das Komposit, welches in den Ansprüchen 12 bis 13 definiert ist, aufweist.

15. Platte nach Anspruch 14, wobei die Platte eine Faser mit niedriger Dichte oder eine Faser mit mittlerer Dichte oder eine Faser mit hoher Dichte oder eine Platte mit orientierten Strängen oder Spanplatten oder Sperrholzplatten oder eine Platte mit hohe Dichte oder eine Kombination davon ist.

16. Laminiertes Produkt, welches eine Zusammensetzung der Erfindung nach Ansprüchen 1 bis 8 und lignocelluloses Material und/oder Papier ausgewählt aus: der Klasse von Hochdruck-Laminatprodukten oder der Klasse von kontinuierlichen Presslaminatprodukten und/oder der Klasse von direktdrucklaminierten Produkten aufweist.

17. Isoliertes Material, welches das Komposit, das in den Ansprüchen 12 bis 13 definiert ist, aufweist.

## Revendications

1. Composition aqueuse comprenant :
a. de la farine végétale avec un contenu en protéines de 30 % à 80%, avec un pourcentage massique entre 10 % et 24% en rapport de la masse totale de la composition ;
b. un acide dicarboxylique ou l'anhydride correspondant ou un acide tricarboxylique avec un pourcentage massique entre 1% et 4% en rapport de la masse totale de la composition ;
c. du carbamide avec un pourcentage massique entre 4% et 20% en rapport de la masse totale de la composition ;
d. Un composé correcteur de pH qui comprend un groupe aminé avec un pourcentage massique entre 1% et 5% en rapport de la masse totale de la composition.

2. Composition selon la revendication 1, qui comprend aussi un agent de contrôle du pH choisi parmi : un hydroxyde d'un métal alcalin ou un carbonate d'un métal alcalin, ou un hydroxyde d'un métal alcalino-terreux, ou un carbonate d'un métal alcalino-terreux

3. Composition selon les revendications 1 ou 2, comprenant :
a. De la farine végétale avec un contenu en protéines de 30 % à 80%, avec un pourcentage massique entre 10 % et 24% en rapport de la masse totale de la composition ;
b. un acide dicarboxylique ou l'anhydride correspondant ou un acide tricarboxylique avec un pourcentage massique entre 1% et 4% en rapport de la masse totale de la composition ;
c. du carbamide avec un pourcentage massique entre 4% et 20% en rapport de la masse totale de la composition ;
d. un composé correcteur de pH qui comprend un groupe aminé avec un pourcentage massique entre 1% et 5% en rapport de la masse totale de la composition ;
e. un agent de contrôle du pH choisi parmi : un hydroxyde d'un métal alcalin ou un carbonate d'un métal alcalin ou un hydroxyde d'un métal alcalino-terreux ou un carbonate d'un métal alcalino-terreux avec un pourcentage massique entre 0.1% et 0.5% en rapport de la masse totale de la composition.

4. Composition selon l'une quelconque des revendications 1 à 3, dans laquelle l'acide dicarboxylique ou tricarboxylique est aromatique, aliphatique ou cyclique et le nombre de carbones de l'acide dicarboxylique ou tricarboxylique est entre 4 et 36.

5. Composition selon l'une quelconque des revendications 1 à 4, dans laquelle l'anhydride de l'acide carboxylique est l'anhydride maléique.

6. Composition selon l'une quelconque des revendications 1 à 5, dans laquelle la farine végétale est une farine de soja déshuilée avec un contenu en protéine de 40% à 50%.

7. Composition selon l'une quelconque des revendications 1 à 6, dans laquelle le composé correcteur de pH qui a un groupe amine est la monoéthanolamine.

8. Composition selon l'une quelconque des revendications 1 à 7 qui comprend aussi un additif sélectionné parmi le groupe : agents imperméabilisant, agents ignifugeant, colorants, agents de réticulation et catalyseurs

9. Méthode pour obtenir la composition selon les revendications 1 à 8, qui comprend la dispersion dans l'eau des composés a) à d) de la revendication 1 ou a) à e) de le revendication 3 à une température entre 4°C à 100°C.

10. Utilisation de la composition telle que définie dans les revendications 1 à 8 comme bioadhésif.

11. Composite qui comprend une composition selon les revendications 1 à 8 et un matériau lignocellulosique ou de la laine de roche ou du papier ou de la fibre de verre ou du plastique ou du liège.

12. Composite selon la revendication 11, qui comprenant une composition selon les revendications 1 à 8 et un matériau lignocellulosique.

13. Composite selon la revendication 12, dans laquelle la composition selon les revendications 1 à 7 est comprise dans un pourcentage entre 5 et 35% de masse sèche en rapport de la masse sèche du matériau lignocellulosique.

14. Panneau comprenant le composite défini dans les revendications 12 et 13.

15. Panneau selon la revendication 14, dans lequel le panneau est de la fibre à basse densité ou de la fibre à moyenne densité ou de la fibre à haute densité ou un panneau à lamelles orientés ou un panneau en aggloméré ou un panneau en contreplaqué ou un panneau à haute densité ou une combinaison de ces derniers.

16. Produit laminé qui comprend la composition de l'invention selon les revendications 1 à 8 et un matériau lignocellulosique et/ou du papier, sélectionné parmi : la classe des produits laminées sous haute pression et/ou la classe des produits laminés sous presse continue et/ou la classe des produits laminées sous pression directe.

17. Matériau isolé comprenant le composite défini dans les revendication 12 et 13.
